# EUROPEAN PATENT APPLICATION

(11) **EP 4 818 796 A1**
(43) Date of publication of application: **07.10.2026**
(21) Application number: 25198238.5
(22) Date of filing: 26.08.2025
(51) Int. Cl.: G02F 1/015, G02B 6/13, G02F 1/025

(54) **FABRICATION OF GESI ELECTRO-ABSORPTION MODULATORS**

(30) Priority: 31.03.2025 EP 25167496
(71) Applicant: IHP GmbH - Leibniz Institute for High Performance Microelectronics/ Leibniz-Institut für innovative Mikroelektronik, 15236 Frankfurt (Oder) (DE)
(72) Inventor: Steckler, Daniel, 15236 Frankfurt (Oder) (DE); Lischke, Stefan, 15236 Frankfurt (Oder) (DE); Yamamoto, Yuji, 15236 Frankfurt (Oder) (DE); Wen, Wei-Chen, 15236 Frankfurt (Oder) (DE); Zimmermann, Lars, 15236 Frankfurt (Oder) (DE)
(74) Representative: Eisenführ Speiser

(57) **Abstract**

A method for fabricating an electro-absorption modulator, EAM, comprises defining a Silicon, Si, slab layer, which forms a lateral sequence of a first Si slab region of a first conductivity type of and a second Si slab region of intrinsic conductivity. On the Si slab layer a Germanium-Silicon, GeSi, layer of intrinsic conductivity is epitaxially grown in a material composition suitable for C-Band or O-Band operation of the EAM. The epitaxial growth of the GeSi layer comprises performing an epitaxial deposition process for depositing a Germanium, Ge, layer on the Si slab layer with a repeated intermittent epitaxial deposition process for depositing a Si amount corresponding to a respective Si delta layer, and performing post-annealing after all the epitaxial Si delta layer deposition processes for achieving a homogeneous spatial distribution of the intermittently deposited Si in the GeSi layer. In the GeSi layer a central fin-shaped GeSi modulation region is defined, which protrudes from laterally adjacent GeSi slab regions, which cover the respective Si slab regions beside the GeSi modulation region and with them jointly form respective EAM slab regions. The EAM slab regions are individually doped to form a lateral sequence having a first EAM slab region of intrinsic conductivity between a second EAM slab region of p-conductivity and a third EAM slab region of n-conductivity in electrical contact with the GeSi modulation region. Furthermore, contacts to the second and third EAM slab regions are fabricated.

## Description

The present invention is related to electro-absorption modulators and to processes for fabricating electro-absorption modulators. It also relates to the co-integration of electro-absorption modulators with photodiodes and to corresponding fabrication processes.

Electro-absorption modulators (EAMs) are key components in high-speed optical communication systems, enabling the modulation of light intensity through voltage-controlled changes in the absorption coefficient of a semiconductor material. EAMs combine compact size, low power consumption, and high modulation bandwidth, making them highly suitable for integration into photonic integrated circuits (PICs).

EAMs are widely employed in data centers and long-haul fiber optic networks requiring energy-efficient, high-speed interconnects. While traditional EAMs are commonly fabricated using III-V semiconductor materials, recent advancements have demonstrated the viability of germanium-based EAMs, particularly for integration with silicon photonics platforms. Germanium, with its strong Franz-Keldysh effect and compatibility with standard CMOS fabrication processes, enables the development of high-performance, scalable modulators directly on silicon substrates for monolithic integration of photonic and electronic components.

WO 2022/043513A1 relates to a diode structure that can be used as an electro-absorption modulator and comprises a p-doped region, an n-doped region, and a light-sensitive intrinsic region sandwiched laterally between the p-doped region and the n-doped region in a direction transverse to a direction of light propagation in the diode. The p-doped region is made of boron-doped Si or SiGe and the n-doped region is made of phosphorous-doped Si or SiGe. The intrinsic region is made of a Ge, GeSn, or SiGe. The intrinsic region has a maximal lateral extension between two lateral ends of the intrinsic region of equal to or below 1000nm. In variants with implants in the bottom and top regions a Ge/GeSi, a preferred lateral extension is around 800 nm. For variants without bottom- and top-implant a preferred lateral extension is 400nm.. The p-doped region and then-doped region are in-situ doped such that the intrinsic region is not doped when the diode is produced. Some embodiments of the diode are described as achieving a - 3dB bandwidth of 110 GHz at 2V reverse bias.

In optical communications, the terms O-band, C-band, and L-band refer to standardized wavelength ranges used for transmitting data over fiber optic networks. These bands are defined based on the transmission properties of optical fiber, particularly regions of low attenuation and dispersion. The O-band spans approximately 1260 to 1360 nm and was the first band used in optical communications; it is now mainly employed in short-reach interconnects and data center applications due to its low chromatic dispersion. Other bands are defines, like the S-band (1460-1530 nm), the C-band (1530-1565 nm), which is most widely used for long-haul systems because of its low fiber loss, and the L-band (1565-1625 nm).

Ge EAMs can effectively operate in the C- and L-bands, because the direct band transition between the valence band and the conduction band in Ge corresponds to photon energies (and thus wavelengths) in both the C- and L-band ranges. Ge EAMs have been shown to achieve a -3dB-bandwidth of 100 GHz and beyond at L-Band wavelengths (~1600 nm). The -3dB bandwidth of an EAM determines the data rate it can handle in an optical communication system. Known C-Band devices achieve -3dB-bandwidths of 67 GHz (modulation frequency).

### SUMMARY OF THE INVENTION

It would be desirable to provide a fabrication process for an EAM that allows operating the EAM in the C- and O-band ranges with an increased maximum data rate.

According to a first aspect of the present invention, a method for fabricating an electro-absorption modulator, EAM, comprises:
- defining a Silicon, Si, slab layer, which forms a lateral sequence of a first Si slab region of a first conductivity type and a second Si slab region of intrinsic conductivity,
- epitaxially growing on the Si slab layer a Germanium-Silicon, GeSi, layer of intrinsic conductivity in a material composition suitable for C-Band or O-Band operation of the EAM; wherein epitaxially growing the GeSi layer comprises
   - performing an epitaxial deposition process for depositing a Germanium, Ge, layer on the Si slab layer with a repeated intermittent epitaxial deposition process for depositing a Si amount corresponding to a respective Si delta layer, and
   - performing post-annealing after all the epitaxial Si delta layer deposition processes for achieving a homogeneous spatial distribution of the intermittently deposited Si in the GeSi layer;
- defining in the GeSi layer a central fin-shaped GeSi modulation region, which protrudes from laterally adjacent GeSi slab regions, which cover the respective Si slab regions beside the GeSi modulation region and with them jointly form respective EAM slab regions,
- individually doping the EAM slab regions to form a lateral sequence having a first EAM slab region of intrinsic conductivity between a second EAM slab region of p-conductivity and a third EAM slab region of n-conductivity in electrical contact with the GeSi modulation region;
- fabricating contacts to the second and third EAM slab regions.

The method of the present invention achieves the advantage of a particularly homogenous concentration level of Si in the GeSi layer of intrinsic conductivity at the required very low concentration levels of Si and over a thickness of the intrinsic GeSi layer, which is in the range of 100 nm to 700 nm. Some variants have a GeSi layer thickness of 400n, improved homogeneity in comparison with known fabrication processes is in particular achieved across the whole wafer, on which a large number of the electro-absorption modulators is fabricated at the same time.

As tests have shown, the proposed fabrication method and the resulting EAM of the present invention allow achieving a Ge-based EAM with -3dB-bandwidths >110 GHz in the C-band wavelength region. EAM-bandwidths > 110 GHz are enabled by high and homogeneous electric fields over the intrinsic region, which is also beneficial for the extinction ratio of such devices. At the same time the fin-construction scheme allow achieving very low values of the series resistance R and capacitance C, which translates to highest frequencies, which, as calculations show, allow achieving even 250 GHz and more.

The invention is based on the following additional considerations. For operation in the C-band, the desired Si fraction in the GeSi layer of intrinsic conductivity is particularly low, typically in the range between 0,5% and 2%, in some embodiments even in the range between 0,5% and 1%. In the present art, to realize a low concentration of Si in Ge in this kind of epitaxial process task, other measures such as selecting a suitably small mass flow controllers and/or setting a suitable degree of precursor dilution are routinely chosen. However, such measures introduce undesired restrictions in that higher concentrations of Si in Ge in other layers are more difficult to achieve. The inventors have recognized that in such a conventional approach of growing an intrinsic GeSi layer using a continuous Si precursor flow for Si doping during Ge epitaxy, the required extremely low gas flow rate prevents realizing the required low Si concentration uniformly across all nominally identical EAM devices fabricated on the wafer. Known processes also exhibit an undesired dependence on the pattern size and pattern density, i.e. the size measures associated geometrical arrangements of structural features (lines, holes, trenches etc.) defined on the wafer surface. This non-uniformity across the wafer results in an undesired low process quality and a low parametric yield. In particular, due to the microloading effect, i.e., pattern-dependent non-uniformity where etch/deposition rates vary between dense and isolated features due to local depletion and transport of reactants, the partial pressure of Si and Ge precursors on the Ge surface (in a given device window) depends on depletion. Additionally, surface migration of adsorbed atoms around the device window also affects the Ge concentration and growth rate. In contrast, with the method of the present invention, Si doping and Ge growth are separated. Further, the Si adsorption on the Ge surface can be saturated. By using the saturation, the influence of the depletion and the surface migration effect is reduced for the pattern size and pattern density dependence.

In summary, the present invention thus provides an epitaxial deposition process for depositing a Germanium, Ge, layer on the Si slab layer with a repeated intermittent epitaxial deposition process for depositing a desired Si amount corresponding to a Si delta layer. Furthermore, the invention comprises performing post-annealing after all the epitaxial Si delta deposition processes and Ge deposition for achieving a homogeneous spatial distribution of the intermittently deposited Si in the GeSi layer. The method of the present invention has the advantage of allowing better control of the Si concentration in terms of wafer scale uniformity and pattern size dependence, in particular at the required low concentration levels which in many embodiments are well below 5%, because it decouples the Si doping process from the Ge growth process. The Si dose is mainly determined by adsorption / desorption equilibrium of Si on Ge. The Si diffusion length can be controlled by the final annealing temperature. As mentioned, the process is less dependent on pattern size and density of the EAM structure to be fabricated.

Notably, embodiments of the method of the present invention that incorporate a Si content of between 3% and 5% into the GeSi layer of intrinsic conductivity are suitable for operation in the O-band. The Si concentration of the GeSi layer can be tuned by selecting a suitable number of Si delta layers. The amount of Si used is preferably the same for each Si delta layer.

The method of the present invention includes fabricating GeSi slab regions, which cover respective Si slab regions beside the GeSi modulation region and which with the respective Si slab regions jointly form respective EAM slab regions. Incorporating the doped GeSi slabs reduces the device resistance by taking advantage of a higher carrier mobility of GeSi compared to silicon.

Embodiments of the proposed device and fabrication scheme provide a co-integration of ultra-fast (> 200 GHz) photo detectors (PDs) and fast GeSi EAM (>110 GHz) on the same substrate in a common fabrication flow. Separate epitaxy steps for the EAM and the PD are not required in device concept.

The Si delta layers are preferably fabricated using chemical vapour deposition of dichlorosilane, SiH₂Cl₂, gas to maintain a selectivity of the epitaxial growth. Generally, the term Si delta (δ) layer as used herein refers to an ultra-thin, high-concentration layer of Si embedded within Ge, typically with monolayer or near-monolayer thickness ranging from sub-nanometer to a few nanometers. As such, under normal processing conditions (i.e., without annealing) particularly thin Si layers would embedded in the growing Ge layer. The accompanying annealing process used in the method of the present invention, however, leads to a homogenous distribution of the deposited Si. It should be noted, thus, that there is no intermediate processing stage, in which Si delta layers can be identified by known analytic means such as 1D SIMS depth profiles, 2D EDX maps, or 3D atom probe data. However, use of the process of the present invention can be identified in a sequence of control parameters programming fabrication equipment to perform the method of the present invention.

The dose of an individual Si delta layer can be controlled by selecting suitable process parameters, in particular temperature, pressure and Si precursor (e.g. SiH₂Cl₂) exposure time. The Si delta layer deposition is preferably performed at a temperature between 200 to 500°C. Suitable total pressure values are between 1 and 80Torr. It should be noted that flow rate and exposure time are correlated. If the flow rate is small, the time needs to be longer. The condition for the onset or after-onset of saturation can be used.

In performing the method of the invention, fabricating the p-conductive region, the n-conductive region and the intrinsically conductive modulation region may comprise the following:
- providing a silicon-on-insulator, SOI, substrate, wherein the silicon layer comprises a lateral Si layer sequence that is arranged laterally between an insulator layer and wherein the lateral Si layer sequence comprises, a p-conductive Si region, a Si waveguide region and an n-conductive Si region which forms the Si slab regions of the EAM slab regions;
- selectively depositing the Ge layer on the silicon layer;
- in-situ doping the p-conductive region and the n-conductive region made of Ge.

To achieve particularly low coupling losses between an underlying waveguide and a GeSi EAM and to improve mode confinement in the GeSi modulation region, the fabrication method of the present invention preferably comprises reducing the Si slab layer in thickness to between 20 and 150 nm before growing the GeSi layer of intrinsic conductivity. In some embodiments the resulting thickness of the Si slab layer is only 20 nm. In other embodiments it is between 20 and 40 nm, in further embodiments between 20 and 80 nm. The reduction of the Si slab layer thickness may be achieved using a dry etching process.

Preferably, the method comprises laterally encapsulating the GeSi modulation region between doped silicon layers, and vertically encapsulating the GeSi modulation region between the Si slab layer and a silicon cap layer. This results in an EAM wherein the GeSi modulation region is completely encapsulated by silicon, yielding a good passivation and protection of the GeSi during fabrication. Furthermore, this enables a silicidation, preferably by nickel silicide, of sidewalls of the EAM, including the fin-shaped GeSi modulation regions, which can support lowest device resistances and thus highest bandwidth. An insulator spacer, on the other hand, prevents sidewall silicidation in order to achieve low insertion loss. The inventors have found that silicon alone on the sidewalls of the fin-shaped GeSi modulation region still enables low resistance and homogenous electric field distribution over the GeSi modulation region.

As mentioned, preferred embodiments of the method include depositing a cap layer on the GeSi layer. In some of these embodiments, the Si cap is doped. For instance, doping the Si cap layer may be used to induce either n-type conductivity or p-type conductivity in the cap layer. In preferred implementations, the doping is performed in only a lateral fraction of the cap layer. This may either apply for p-type doping or for n-type doping. In any of these cases, the lateral fraction of the Si cap layer that is subjected to the doping overlaps in its lateral extension with the EAM slab region of the same conductivity type. The remaining lateral fraction keeps its intrinsic conductivity. The doping may be performed using one of different process variants, which will be described further below in the context of the detailed description of embodiments with respect to the drawings.

The silicon cap layer may be used for conveying compressive strain to be induced in the GeSi layer. A process variant using this concept may for instance comprise depositing a stressor layer on the silicon cap layer to induce compressive strain in the GeSi layer. The compressive strain assists in shifting the direct bandgap of the GeSi modulation region to higher energies, which assists in achieving operation in the O-Band and allows keeping the Si concentration in the GeSi modulation region lower. The stressor layer is preferably made of an insulating material. Silicon nitride, SiN, is an example of a suitable insulating material for inducing the compressive strain in the GeSi layer. In particular, tensile-strained silicon nitride may be used. Suitably, in embodiments of this type, defining a central fin-shaped GeSi modulation region in the GeSi layer comprises selectively removing the stressor layer laterally outside the fin-shaped GeSi modulation region while keeping it on the GeSi modulation region. The silicon nitride stressor layer may additionally serve as a chemical mechanical polishing (CMP) stopping layer, while lowering the height of a protruding poly-silicon region adjacent to the fin-shaped GeSi modulation region. For GeSi photodiodes fabricated concurrently with the EAMs (cf. next paragraph), the same silicon nitride pedestal may also function as an optical waveguide, for direct SiN-waveguide coupling into the structure.

This proposed device and fabrication scheme exclusively enables the co-integration of ultra-fast (> 200 GHz) photo detectors and fast GeSi EAM (>110 GHz) on the same substrate in a common fabrication flow. A second aspect of the present invention therefore is a method for fabricating an optoelectronic circuit, comprising
- fabricating an electro-absorption modulator according using the method of any of the preceding claims in a first substrate region;
- fabricating a fin-shaped GeSi photodetector in a second substrate region.

Separate epitaxy steps for the EAM and the photodetector are not required in the concept of the present invention. The method of the second aspect is therefore preferably performed such that all its steps involving epitaxial growth are performed concurrently in the first and second substrate regions, and no steps involving epitaxial growth are performed only in one of the first or second substrate regions.

The following turns to a more detailed description of embodiments with reference to the drawings.

### BRIEF DESCRIPTION OF THE DRAWINGS

Fig. 1 is a schematic drawing of a GeSi EAM according to the present invention
Fig. 2 is a schematic drawing of a GeSi fin-shaped photodiode (left) and a GeSi EAM (right) corresponding to Fig. 1 fabricated concurrently to be co-integrated on the same wafer-substrate. In case of the photodiode, higher electrical fields (thus stronger Franz-Keldysh Effect) in the narrower Ge region enable sufficient absorption. The width of the Ge region can be adjusted by the device layout and thus enables independent optimization of photodiode and modulator.
Figs. 3 to 17 illustrate an EAM in different processing stages of a first embodiment of a method for fabricating an EAM in accordance with the present invention.
Figs. 18 and 19 illustrate an EAM in two processing stages of a second embodiment of a method for fabricating an EAM in accordance with the present invention, forming a first variant of the first embodiment;
Figs. 20 to 25 illustrate an EAM in processing stages of a third embodiment of a method for fabricating an EAM in accordance with the present invention, forming a second variant of the first embodiment;
Fig. 26 is an annotated electron-microscopic cross-sectional view of a further embodiment of an EAM fabricated using a method of the present invention.

### DETAILED DESCRIPTION OF EMBODIMENTS

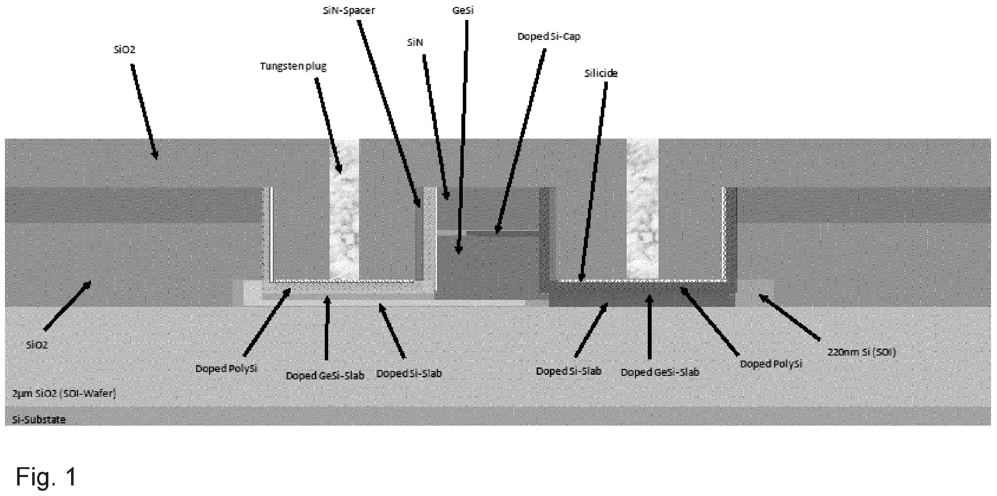

Figure 1 is a schematic drawing of a cross-sectional view of a GeSi EAM fabricated by a method according to the present invention, where the device plane shown is perpendicular to a direction of light incidence. All structural features are explained by annotations in Fig. 1. Colours shown in the figures for a given structural element will be used for the same structural element also in the following drawings. The drawing shows the device in a processing stage up to the fabrication of tungsten contacts. In particular, further processing involving for instance the fabrication of metal pads are not shown.

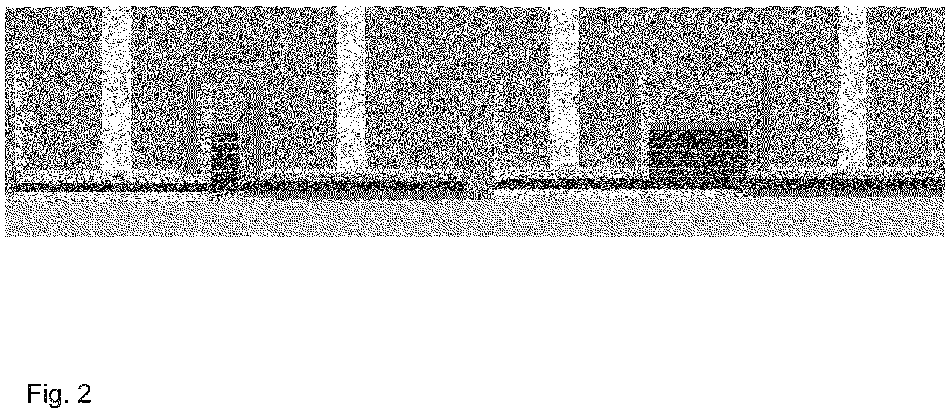

Figure 2 is a schematic drawing of a GeSi fin-shaped photodiode (left) and a GeSi EAM (right), both having a structure corresponding to that of the EAM of Fig. 1, even if somewhat differing in their respective geometrical extensions. The photodiode and the EAM are fabricated concurrently to be co-integrated on the same wafer-substrate. In case of the photodiode, higher electrical fields and thus a stronger Franz-Keldysh Effect in order to enable sufficient absorption can be achieved by providing a narrower GeSi region. The width of the GeSi region can be adjusted by the device layout and thus enables independent optimization of the photodiode and the EAM.

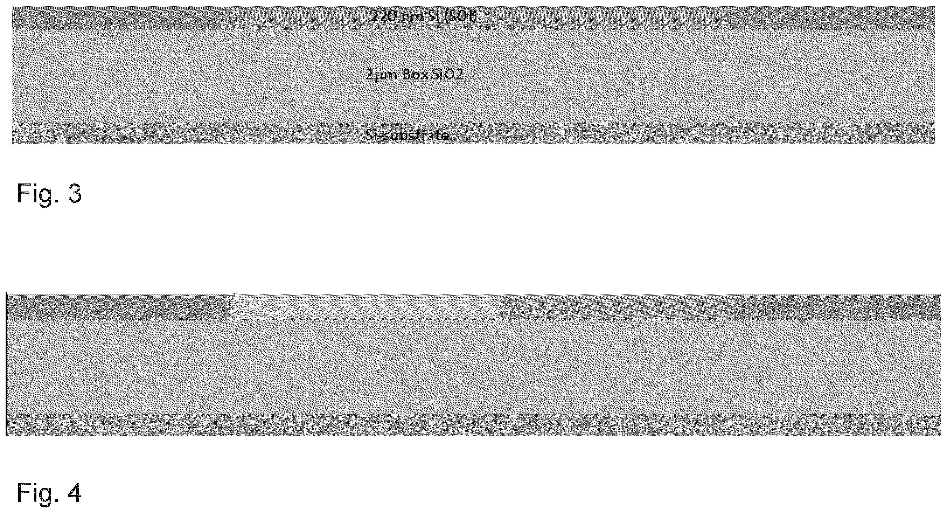

Figs. 3 to 17 illustrate the EAM of Fig. 1 in different processing stages of a first embodiment of a method for fabricating the EAM in accordance with the present invention. For processing result and the identification of individual structural elements shown, reference is thus made to the annotations in Fig. 1.

As shown in Fig. 3, the process starts with a SOI substrate having a Si substrate, a 2 micrometer thick buried silicon dioxide layer (SiO2) on the Si substrate, and a 220 nanometer thick Si layer on the silicon dioxide layer.

Fig. 4 shows the EAM after ion implantation in the Si wave guide region. The doping serves to define a doped Si slab region of a first conductivity type and to form a bottom electrode by ion-implantation into the Si (orange color). In this example, a p-type doping is performed. The remaining Si slab region (grey) remains intrinsically conductive. In another variant, instead of a p-type doping an n-type doping may performed on the right side of the intrinsically conductive Si slab region. Outside of the Si wave guide region intended for doping, a mask is used to limit the lateral extension of the doped region.

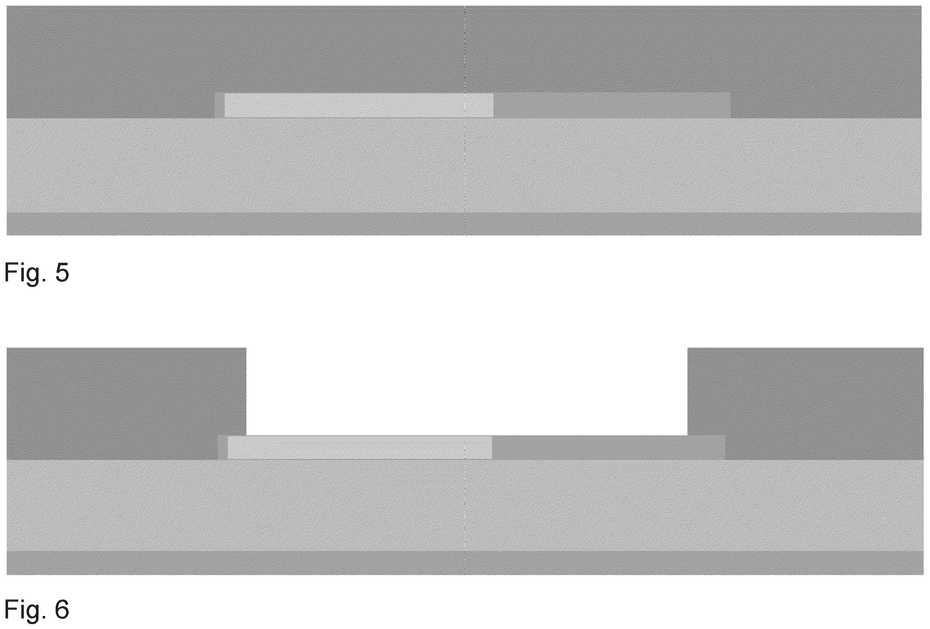

Fig. 5 shows the EAM after deposition of a mask layer for subsequent epitaxial processes. The mask layer can be made of SiO2.

Fig. 6 shows the EAM after opening of an epitaxial window in the mask layer.

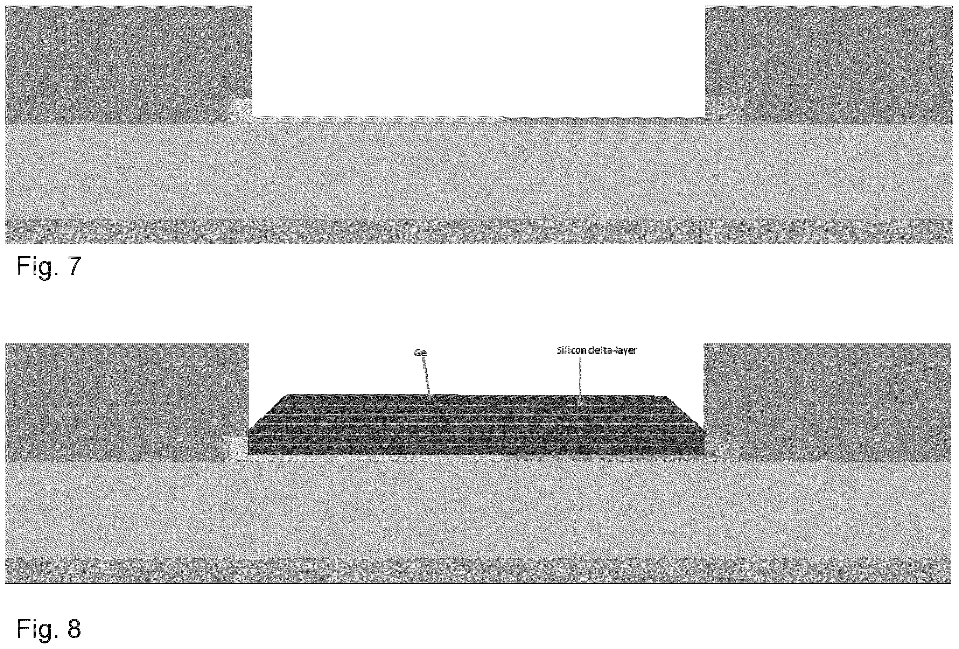

Fig. 7 shows the EAM after a reduction of the thickness of the Si slab layer. The process is performed by dry-etching. This process steps helps achieving low coupling losses in improving mode confinement in the GeSi modulation region to be fabricated in later process steps. The resulting thickness after at the stage shown in Fig. 7 is between 20 and 150 nm.

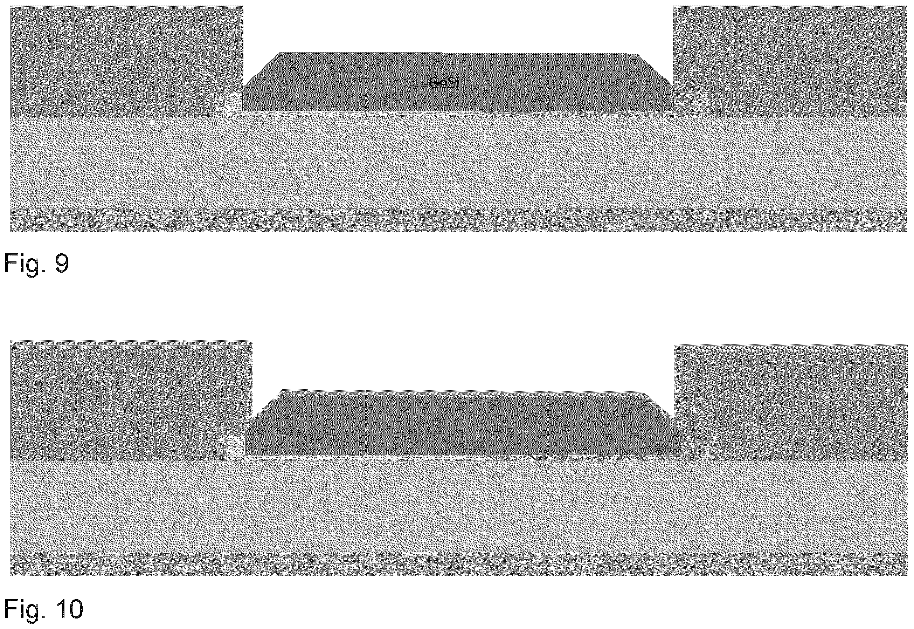

Figs. 8 and 9 serve to illustrate the fabrication step of epitaxially growing on the Si slab layer a Germanium-Silicon, GeSi, layer of intrinsic conductivity in a material composition suitable for C-Band or O-Band operation of the EAM. As illustrated by Fig. 7, epitaxially growing the GeSi layer comprises performing an epitaxial deposition process for depositing a Germanium, Ge, layer on the Si slab layer with a repeated intermittent epitaxial deposition process for depositing a Si amount corresponding to a respective Si delta layer. As mentioned before, the amount of Si for each Si delta layer is preferably the same. As Fig. 8 illustrates, the process also comprises performing post-annealing to the epitaxial deposition processes for achieving a homogeneous spatial distribution of the intermittently deposited Si in the GeSi layer. The annealing is suitably performed right before the deposition of a Si cap layer. It is noted that Fig. 7 does not illustrate an intermediate processing stage that can actually be reproduced during the fabrication of a real device because each deposition of Si that is performed in correspondence with a Si delta layer deposition, the concurrent annealing will substantially immediately homogenize the spatial distribution of Si atoms in the growing GeSi layer, such that no layer sequence of Ge and Si with intermittent Si delta layers according to the illustration of Fig. 8 is formed at any time. Rather, the result will look as illustrated in Fig. 9, having a particularly homogeneous Si distribution in the GeSi layer.

Fig. 10 illustrates the EAM after a differential epitaxial growth of a Si cap layer on the GeSi layer and the surrounding mask.

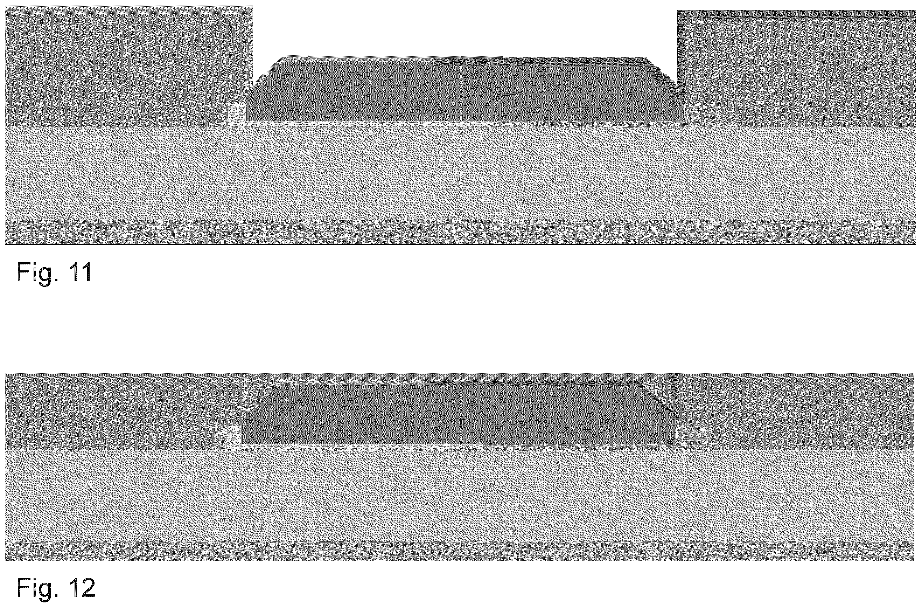

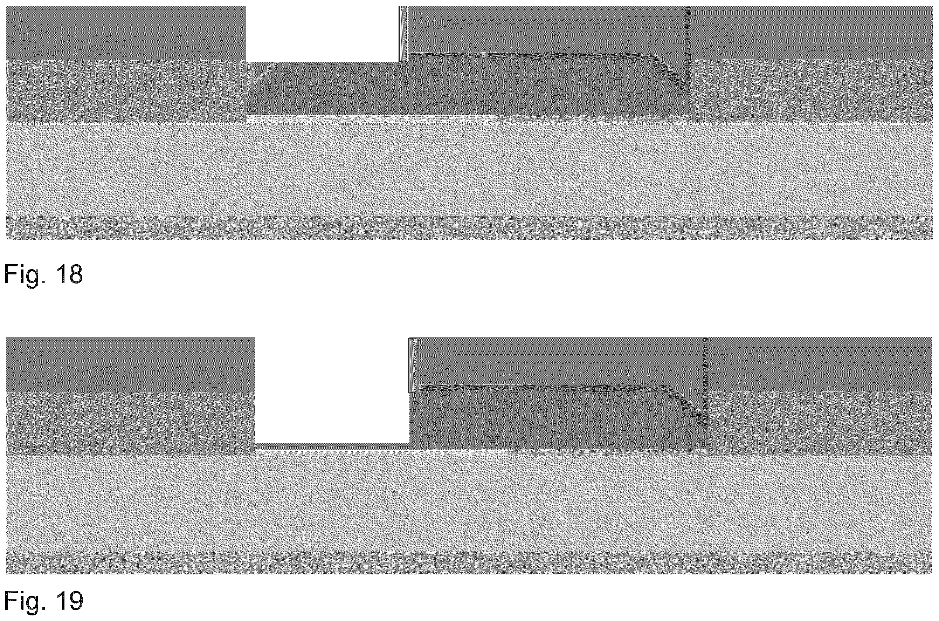

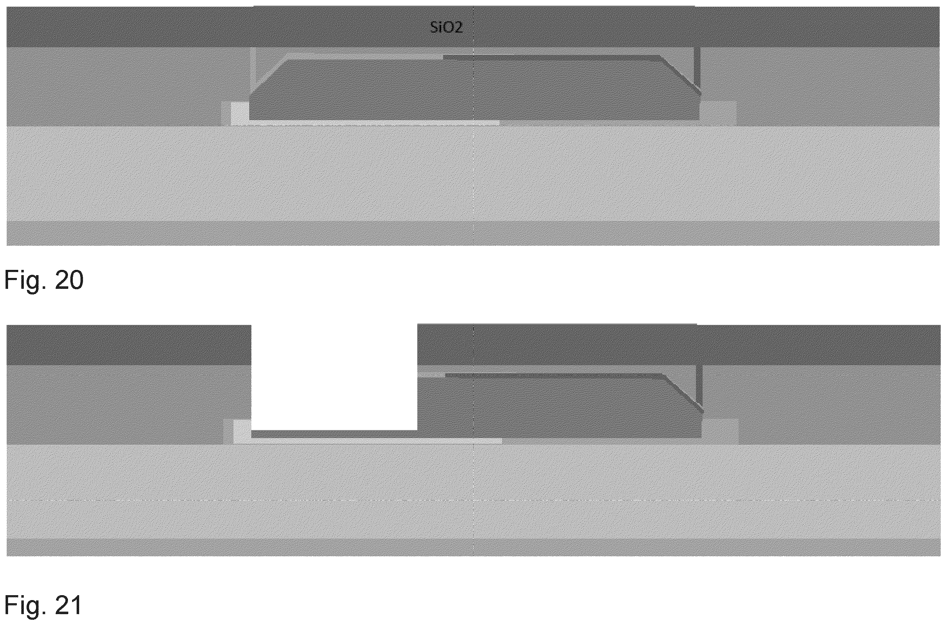

Fig. 11 illustrates the EAM after an implantation of dopants of the opposite conductivity type as those used for reaching the processing stage of Fig. 4. In this case, one or more n-type dopants are implanted, such as P or As. The doping region extends laterally over only a fraction of the GeSi layer, but laterally overlaps with the p-type doping region underneath the GeSi layer. Other processing options for achieving the doping the Si cap layer at this processing stage will be shown further below with reference to Figs. 18 and 19, and with reference to Figs. 20 to 25.

It is noted that the doping steps in the silicon regions below (silicon waveguide, SOI, Fig. 4) as well as above the GeSi (silicon cap) enables an arbitrary adjustment of the horizontal and vertical electric field by layout/design and GeSi epitaxy adjustments (thickness of the GeSi layer). For instance, an increase of the lateral GeSi-width reduces the overlap with highly doped silicon sidewalls and silicide regions fabricated in later processing steps which goes along with a decrease of optical losses. At the same time the extinction ratio can be kept high due to the high vertical electric field, when the GeSi height is below 400 nm.

Fig. 12 shows the EAM after deposition of a SiO2 mask and subsequent chemical mechanical polishing (CMP). The CMP step serves to remove the Si deposited outside the epitaxy window during the fabrication of the Si cap layer.

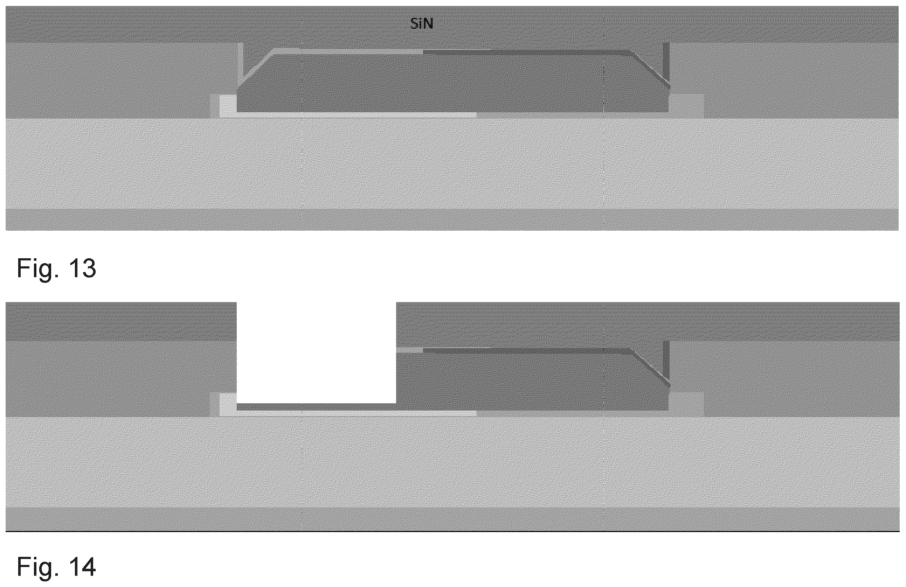

Fig. 13 shows the EAM after removal of the SiO2 mask section (Fig. 12) deposited in the epitaxy window, i.e. on top of the Si cap layer. This typically amounts to removing a few tens to a few hundreds of nanometers of SiO2 by an either a dry-etch or a wet-etch process, followed by the deposition of a SiN layer. The deposition of the SiN layer may be performing using a chemical vapor deposition (CVD) process, for instance a liquid phase or a plasma enhanced CVD process. The SiN layer may serve as a stressor layer, as explained herein above. In particular, a tensile-strained silicon nitride (e.g., LPCVD Si₃N₄) pedestal may be introduced on top of the silicon cap layer. This addition induces compressive strain in the GeSi layer, shifting the operational wavelength of the electro-absorption modulator towards shorter wavelengths. Consequently, lower silicon concentrations can be used in the GeSi alloy, which reduces the device's insertion loss. Unlike in other approaches, the SiN-stressor layer is self-aligned to the germanium region below. There is no additional mask effort required. In fact, the SiN layer is also used as a part of a hardmask stack in the further processing.

Fig. 14 shows the EAM after removal of the SiN layer, the Si cap layer and a partial (only almost complete) removal GeSi layer in the region that is to become an EAM slab region of p-type conductivity. The removal of the GeSi layer by etching is adjusted in such a way that a GeSi slab region remains.

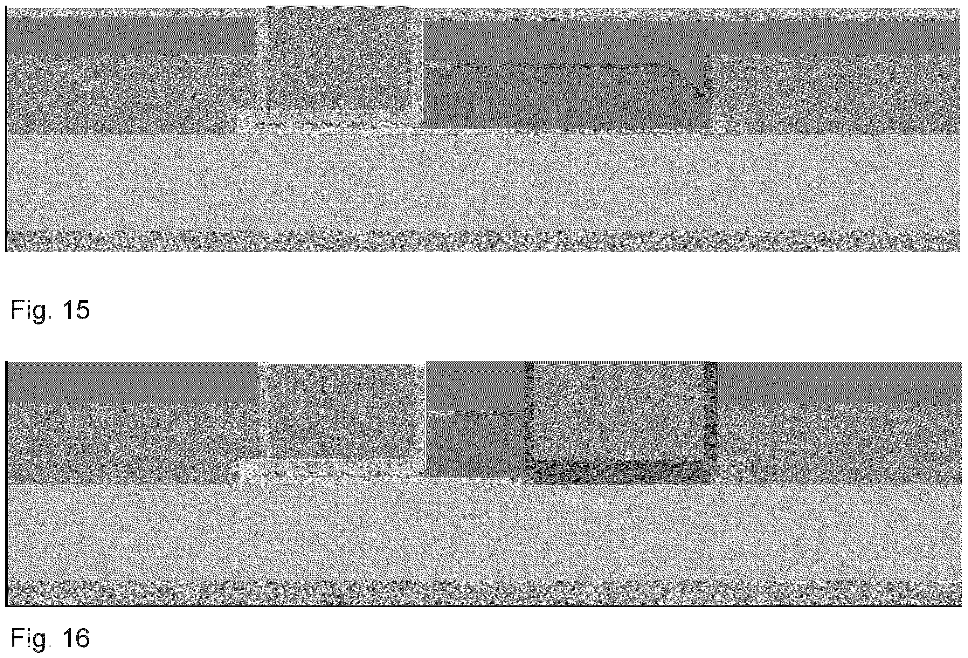

Fig. 15 shows the EAM after subsequent deposition of doped poly Si, a self-aligned perpendicular high-dose implant of the GeSi slab region that at the same time increases the dopant concentration in the underlying Si slab region to be used as a contact region, and after a subsequent fill with SiO2.

Fig. 16 shows the EAM after the following removal of the poly Si from surface regions by CMP. In this processing step, the previously deposited SiN layer serves as a CMP stop layer. This is advantageous because the SiN extends of the entire surface, just not on the opened p-side of the EAM. Furthermore, at the processing stage of Fig. 16, the n-side of the EAM has been structured. In this processing step, as for the p-side, a GeSi slab layer is spared from etching and left on top of the Si slab layer. Fig. 16 further shows the EAM after a deposition of an n-doped poly Si layer, as correspondingly performed on the p-side, and a high-dose implant for doping the GeSi slab layer and for increasing the dopant concentration in the underlying Si slab region to be used as a contact region, and after a subsequent fill with SiO2.

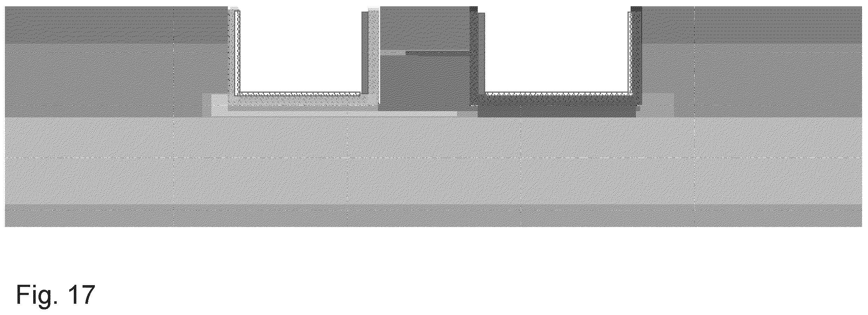

Fig. 17 shows the EAM after removing the previously deposited SiO2 from the contact regions above the doped GeSi slab layers. A wet etch may be used. In this step, the SiN layer serves as a wet-etch hardmask for the oxide removal, which thus achieves a self-alignment of the wet-etching. Furthermore, Fig. 17 shows the EAM after a formation of SiN spacers on the sidewalls of the fin-shaped GeSi modulation region. It is noted that this SiN spacer formation is optional and may not be performed in a process variant (not shown). Furthermore, to reach the processing stage shown in Fig. 17, the SiN layer may be removed from outside the EAM using a combination of lithography and etching (masked dry etch or wet etch) processes (not shown). Using a dry etch process offers the option of structuring the SiN layer as an optical waveguide to directly feed the EAM. Furthermore, at the processing stage shown in Fig. 17, spacers have been formed to prevent degradation of SiN waveguide performance. Furthermore, a self-aligned silicidation process has been performed.

The next processing steps lead to the EAM of Fig. 1 and involve the fabrication of tungsten plugs in the doped EAM slab regions, extending through a SiO2 layer deposited on top of the device structure of Fig. 17.

The described fabrication process enables a precise structuring of a GeSi EAM. Additionally, this method achieves a thinner poly-silicon layer adjacent to the fin-shaped GeSi modulation layer, thereby alleviating tensile strain without a significant increase in resistance.

Thus, this approach decouples the stain which is induced to the GeSi region from the adjacent Si regions from the resistance optimization: a thicker poly Si reduces the resistance but increases unwanted tensile strain in the Germanium. A thinner poly Si region reduces unwanted strain but entails increased resistance, being on the expense of the modulator (or photodiode) performance. An increased resistance by using a thinner poly Si can be compensated by leaving a Ge or GeSi slab region.

Figs. 18 and 19 illustrate an EAM in two processing stages of a second embodiment of a method for fabricating an EAM in accordance with the present invention, forming a first variant of the first embodiment that was described with reference to Figs. 3 to 17.

The processing steps illustrated in Figs. 18 and 19 lead to the processing stage corresponding to that of Fig. 14. Here, the Si cap layer is in-situ doped during deposition instead of using an ion implantation process. Furthermore, a SiO2 spacer layer (SiN could also be used) is formed (Fig. 18), followed by a GeSi dry etch via the SiO2 (or SiN) spacer.

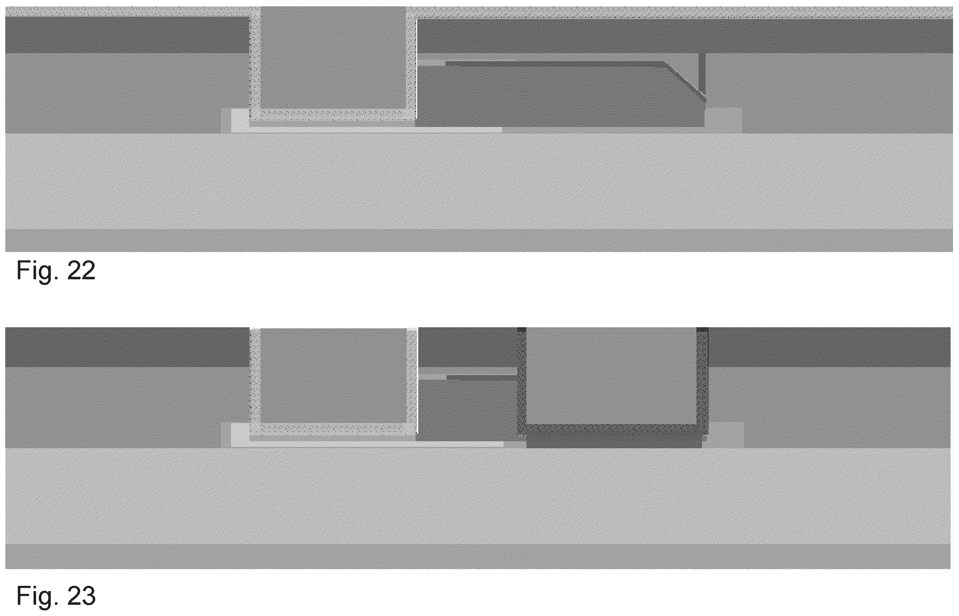

Figs. 20 to 25 illustrate an EAM in processing stages of a third embodiment of a method for fabricating an EAM in accordance with the present invention, forming a second variant of the first embodiment. The processing stage of Fig. 20 corresponds to that of Fig. 13, except that no SiN layer has been deposited as a hardmask, but a SiO2 hardmask has been deposited. The EAM of the processing stage of Fig. 21 corresponds to that of Fig. 14 (with the same exception as for Fig. 20). In the processing stage of Fig. 22, doped poly Si has been deposited, followed by a self-aligned perpendicular high-dose implant to dope the GeSi slab and to increase the dopant concentration in the underlying Si slab forming the contact region. Subsequently, the region has been filled with SiO2.

Fig. 23 shows the EAM after the following removal of the poly Si from surface regions by CMP. In this processing step, the previously deposited SiO2 layer serves as a CMP stop layer. Furthermore, at the processing stage of Fig. 23, the n-side of the EAM has been structured. In this processing step, as for the p-side, a GeSi slab layer is spared from etching and left on top of the Si slab layer. Fig. 23 further shows the EAM after a deposition of an n-doped poly Si layer, as correspondingly performed on the p-side, and a high-dose implant for doping the GeSi slab layer and for increasing the dopant concentration in the underlying Si slab region to be used as a contact region, and after a subsequent fill with SiO2.

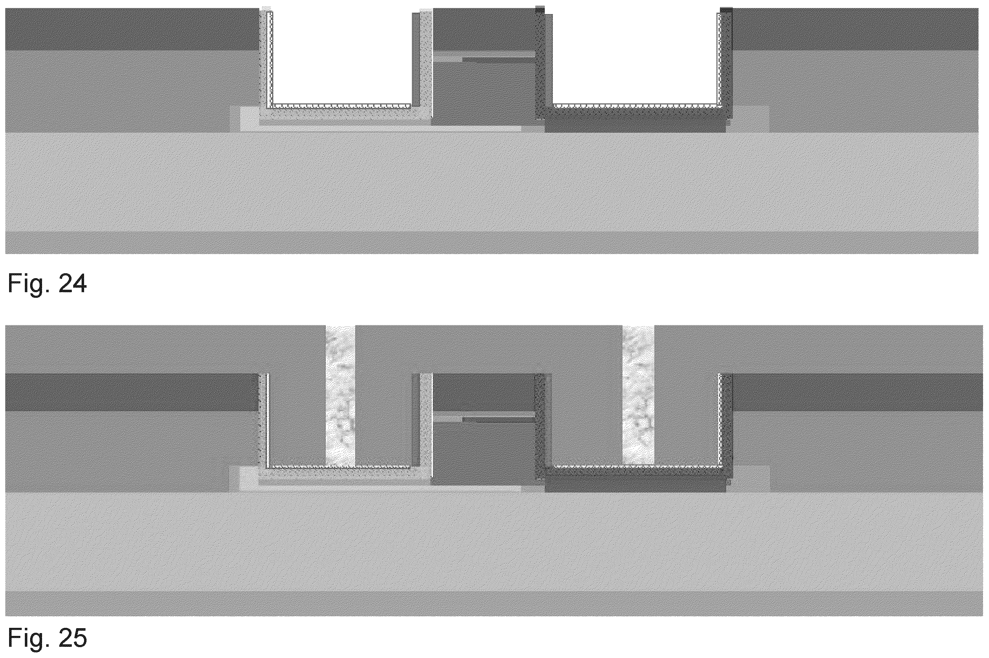

Fig. 24 shows the EAM after removing the previously deposited SiO2 from the contact regions above the doped GeSi slab layers. A wet etch may be used. Furthermore, Fig. 24 shows the EAM after a formation of SiN spacers on the sidewalls of the fin-shaped GeSi modulation region. Furthermore, a self-aligned silicidation process has been performed.

Fig. 25 shows the EAM of this process variant in a processing stage corresponding to that of Fig. 1.

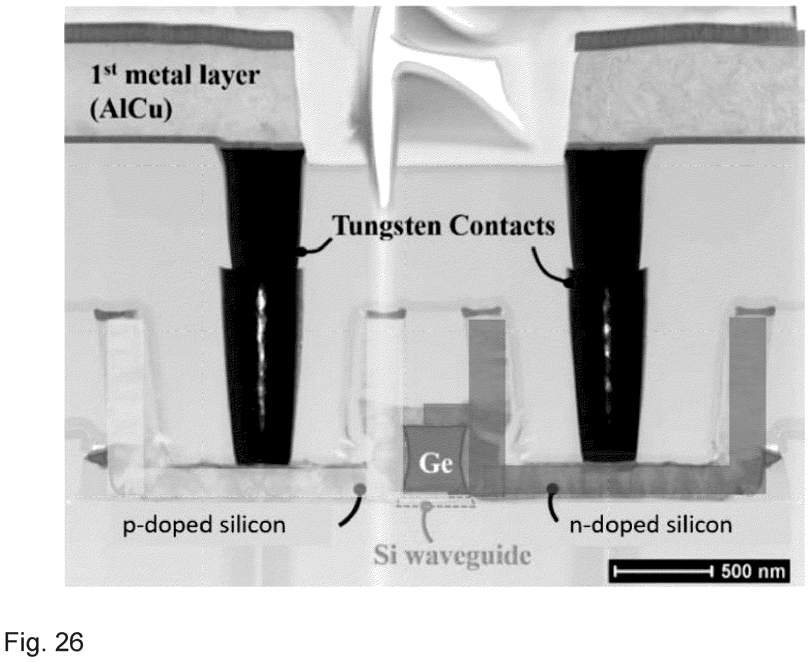

Fig. 26 is an annotated electron-microscopic cross-sectional view of a further embodiment of an EAM fabricated using a method of the present invention. The presented device and fabrication concept distinguishes itself from other devices in that only silicon regions may be doped. Ion implantation or in-situ doping of germanium may thus be completely avoided.

## Claims

1. A method for fabricating an electro-absorption modulator, EAM, comprising:
- defining a Silicon, Si, slab layer, which forms a lateral sequence of a first Si slab region of a first conductivity type of and a second Si slab region of intrinsic conductivity,
- epitaxially growing on the Si slab layer a Germanium-Silicon, GeSi, layer of intrinsic conductivity in a material composition suitable for C-Band or O-Band operation of the EAM; wherein epitaxially growing the GeSi layer comprises
- performing an epitaxial deposition process for depositing a Germanium, Ge, layer on the Si slab layer with a repeated intermittent epitaxial deposition process for depositing a Si amount corresponding to a respective Si delta layer, and
- performing post-annealing after all the epitaxial Si delta layer deposition processes for achieving a homogeneous spatial distribution of the intermittently deposited Si in the GeSi layer;
- defining in the GeSi layer a central fin-shaped GeSi modulation region, which protrudes from laterally adjacent GeSi slab regions, which cover the respective Si slab regions beside the GeSi modulation region and with them jointly form respective EAM slab regions,
- individually doping the EAM slab regions to form a lateral sequence having a first EAM slab region of intrinsic conductivity between a second EAM slab region of p-conductivity and a third EAM slab region of n-conductivity in electrical contact with the GeSi modulation region;
- fabricating contacts to the second and third EAM slab regions.

2. The method of claim 1, wherein the GeSi modulation region is fabricated of GeSi with a silicon atomic fraction between 0,5% and 5 %.

3. The method of claim 1, wherein the GeSi modulation region is fabricated of GeSi with a silicon atomic fraction between 0,5% and 2 %.

4. The method of any of the preceding claims, wherein fabricating the p-conductive second EAM slab region, the n-conductive third EAM slab region region and the intrinsically conductive GeSi modulation region comprises
- providing a silicon-on-insulator, SOI, substrate, wherein the silicon layer comprises a lateral Si layer sequence that is arranged laterally between an insulator layer and wherein the lateral Si layer sequence comprises, a p-conductive Si region, a Si waveguide region and an n-conductive Si region;
- selectively depositing the Ge layer on the silicon layer;
- in-situ doping the p-conductive region and the n-conductive region made of Ge.

5. The method of any of the preceding claims, wherein depositing the Si delta layers comprises performing chemical vapor deposition of dichlorosilane, SiH₂Cl₂, gas as a silicon source.

6. The method of any of the preceding claims, comprising, before growing the GeSi layer of intrinsic conductivity, reducing the Si slab layer in thickness to between 20 and 150 nm.

7. The method of any of the preceding claims, further comprising laterally encapsulating the fin-shaped GeSi modulation region between doped Si spacer layers on the side-walls of the fin-shaped GeSi modulation region, and vertically encapsulating the GeSi modulation region between the Si slab layer and a silicon cap layer.

8. The method of claim 7, further comprising performing a silicidation of the p-conductive region, the n-conductive region and the Si spacer layers, after protecting the doped Si spacer layers on the side-walls of the fin-shaped GeSi modulation region from silicidation by depositing an insulator layer.

9. The method of any of the preceding claims, comprising
- fabricating a Si cap layer of intrinsic conductivity on the GeSi layer;
- doping the Si cap layer to induce either n-type conductivity or p-type conductivity in only a lateral fraction of the cap layer, the lateral fraction of the Si cap layer that is subjected to the doping overlapping in its lateral extension with the EAM slab region of the same conductivity type.

10. The method of any of the preceding claims, further comprising
- depositing a stressor layer on the silicon cap layer to induce compressive strain in the GeSi layer;
- wherein defining in the GeSi layer a central fin-shaped GeSi modulation region comprises selectively removing the stressor layer laterally outside the fin-shaped GeSi modulation region while keeping it on the GeSi modulation region.

11. A method for fabricating an optoelectronic circuit, comprising
- fabricating an electro-absorption modulator according using the method of any of the preceding claims in a first substrate region;
- fabricating a fin-shaped lateral GeSi p-i-n photodetector in a second substrate region.

12. The method of claim 11, wherein all steps involving epitaxial growth are performed concurrently in the first and second substrate regions.
